# EUROPÄISCHE PATENTSCHRIFT

(11) **EP 0 639 884 B1**
(45) Veröffentlichungstag und Bekanntmachung des Hinweises auf die Patenterteilung: **17.05.2000**
(21) Anmeldenummer: 94111376.3
(22) Anmeldetag: 21.07.1994
(51) Int. Cl.: H02K 11/00, H02K 5/22

(54) **Verfahren zur Herstellung einer elektrischen Antriebseinheit**
Method for manufacturing an electrical control unit
Méthode de fabrication d'une unité de commande électrique

(30) Priorität: 17.08.1993 DE 4327584
(43) Veröffentlichungstag der Anmeldung: 22.02.1995
(73) Patentinhaber: Bayerische Motoren Werke Aktiengesellschaft, 80788 München (DE); SAIA AG, CH-3280 Murten (CH)
(72) Erfinder: Schmidt, Ernst, D-85737 Ismaning (DE); Buselmeier, Bernhard, D-85764 Oberschleissheim (DE); Portmann, Urs, CH-1752 Villars-sur-Glane (CH)
(74) Vertreter: Bullwein, Fritz

(56) Entgegenhaltungen:
- EP-A- 0 258 132
- EP-A- 0 469 822
- EP-A- 0 487 761
- EP-A- 0 551 113
- WO-A-92/13381
- DE-A- 1 613 983
- DE-A- 3 805 060
- DE-A- 4 127 911
- US-A- 5 233 246
- In.D.Nührmann: "Das grosse Werkbuch Elektronik" Teil A, 1989, Seiten 201, 599 bis 613
- BMW: Dokumentation "Mechatronik" vom 20.01.1999

## Beschreibung

Die vorliegende Erfindung betrifft ein Verfahren zur HerStellung einer elektrischen Antriebseinheit gemäß dem Oberbegriff des Anspruchs 1.

Es ist bekannt, elektrische Antriebseinheiten individuell mit einem Steuergerät auszurüsten, das üblicherweise einen Mikroprozessor aufweist, um die Antriebseinheit fernzusteuern.

In der EP 0 487 761 A1 ist ein Kleinmotor mit einer ihm zugeordneten Ansteuerelektronik beschrieben. Die Ansteuerelektronik umfaßt eine Leiterplatte, auf welcher ein integrierter Schaltkreis, ein Schaltelement und ein Kühlelement angeordnet sind. Mit der Leiterplatte sind Anschlußstifte verlötet.

Nachteilig bei einer solchen Ausführungsform des Kleinmotors mit Ansteuerelektronik ist die Anzahl der Bearbeitungsschritte bei dessen Herstellung, die sich kostennachteilig auswirkt. Durch den konstruktiven Aufbau der Ansteuerelektronik kann diese überdies nicht von einem einzigen Hersteller oder Zulieferer gefertigt werden.

Aus der EP 0 551 113 A1 ist ein Verfahren zur Herstellung einer Verdrahtungsplatte und der Aufbau einer solchen Verdrahtungsplatte beschrieben, die bei einem motorgetriebenen Aktuator verwendet wird. Um eine Öffnung in der Verdrahtungsplatte mit Leiterbahnen genau Ausrichten zu können, werden die Leiterbahnen und die Öffnung gleichzeitig beim Gießen der Verdrahtungsplatte in diese eingefügt. Die Leiterbahnen dienen als Schleifkontakte und deren Enden gleichzeitig als Anschlußstifte.

Die in der EP 0 551 113 A1 beschriebene Verdrahtungsplatte kann nicht die Funktion eines Steuergerätes erfüllen. Überdies liegen die Oberflächen der Leiterbahnen relativ ungeschützt, so daß Verunreinigungen zu Kurzschlüssen führen können.

In der WO/ 92/13 381 ist ein elektrischer Motor mit einem Steuergerat und ein Verfahren zu seiner Herstellung beschrieben. Der Motor besitzt einen metallischen Deckel mit einem Kunststoff formteil, in das mehrere Leiterbahnen eingebeltet sein können, deren Enden als Stecker dienen. Bei der Herstellung des Kunstsoff formteils werden die Leiterbahnen zunächst über Verbindungsstege zusammenhängend aus einem Blech gestanzt und in ein Spritzwerkzeug eingelegt. Auschließend werden die Verbindungen mittels eines oder mehrerer Trennstempel abfalllos durchtrennt und unter Abstütung durch einen Niederhalter mit Kunstsoff umgossen. An den Steckern können Dioden augeschweißt werden.

Ziel vorliegender Erfindung ist es, ein eingangs genanntes verfahren zur Herstellung einer elektrischen Antriebseinheit mit Steuergerät zu vereinfachen und damit kostengünstiger zu gestalten.

Dieses Ziel wird durch die Merkmale des Anspruchs 1 erreicht.

Die Erfindung wird nun anhand eines in der Zeichnung dargestellten Ausführungsbeispiels näher erläutert.
- Fig. 1: zeigt einen Schnitt durch das Steuergerät einer Antriebseinheit,
- Fig. 2: zeigt Stadien des Herstellungsverfahrens.

Das Steuergerät der Antriebseinheit weist einen Träger 1 auf, der als Stanzteil aus Kupferblech von beispielsweise 0,6 mm Dicke ausgebildet ist. Dieser Träger dient zugleich als mechanischer Träger der übrigen Teile und als elektrischer Leiter für die inneren und äußeren Anschlüsse des Gerätes. So weist der Träger beispielsweise drei Steckkontakte 2 auf, die in üblicher Weise verzinnt sind und dem Anschluß eines nicht dargestellten Kabels dienen. Mit dem Träger sind elektrische Bauteile, beispielsweise ein integrierter Stromkreis 3, ein Schwingelement 4 und ein Kondensator 5 mechanisch und elektrisch verbunden. Ein umgebogener Flansch 6 des Trägers 1 kann als Kühlelement dienen.

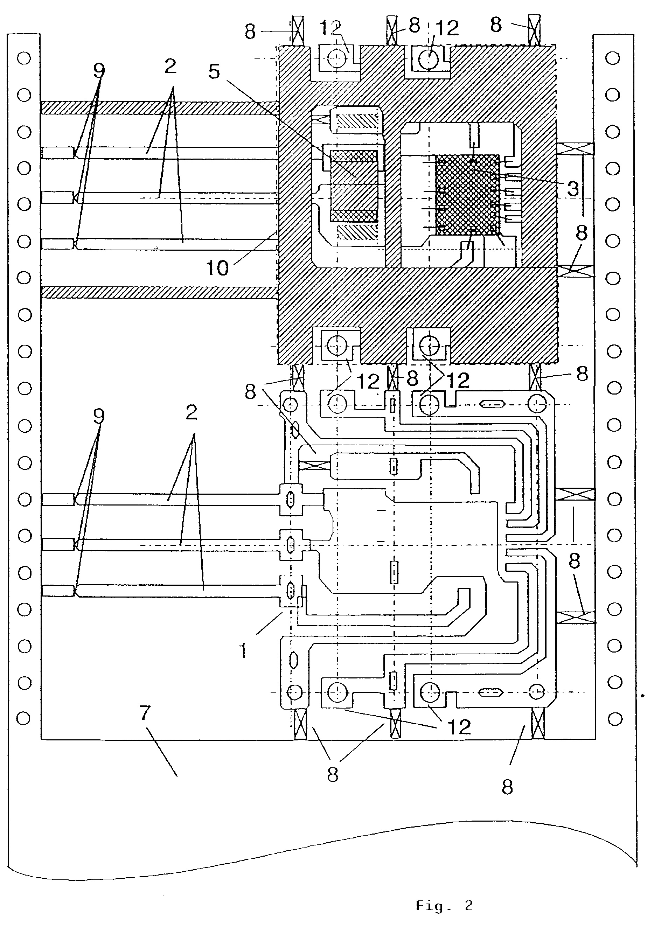

In Fig. 2 ist ein Beispiel dargestellt, wie der Träger hergestellt und ausgebildet sein kann. Mittels eines Stanzwerkzeuges wird der Träger aus einem Band 7 in der in Figur 2 unten dargestellten Form ausgeschnitten. Alle Teile des Trägers sind in diesem Stadium noch miteinander verbunden, und in Figur 2 sind Brücken 8 dargestellt, welche später entfernt werden, um einzelne elektrisch voneinander getrennte Leiterbahnen zu bilden. Diese Leiterbahnen sind z. T. mit ausgeschnittenen Löchern versehen, in welche später in noch zu erläuternder Weise Kunststoff eindringt, um die Teile untereinander zu verbinden bzw. in geeigneter gegenseitiger Lage zu halten. Die Steckkontakte 2 sind über Sollbruchstellen 9 noch mit dem Metallband verbunden, aber sie werden später dort getrennt, um die Steckkontakte 2 elektrisch voneinander zu trennen.

In einem nächsten, in Figur 2 oben dargestellten Fabrikationsschritt wird der Träger 1 mit Kunststoff umspritzt, und zwar längs der in Figur 2 in strichpunktierten Linien 10 angegebenen Konturen, derart, daß Anschlußstellen für die elektrischen Bauteile frei bleiben. Diese Bauteile werden dann in der in Fig. 2 angedeuteten Weise eingesetzt und verlötet oder gebondet.

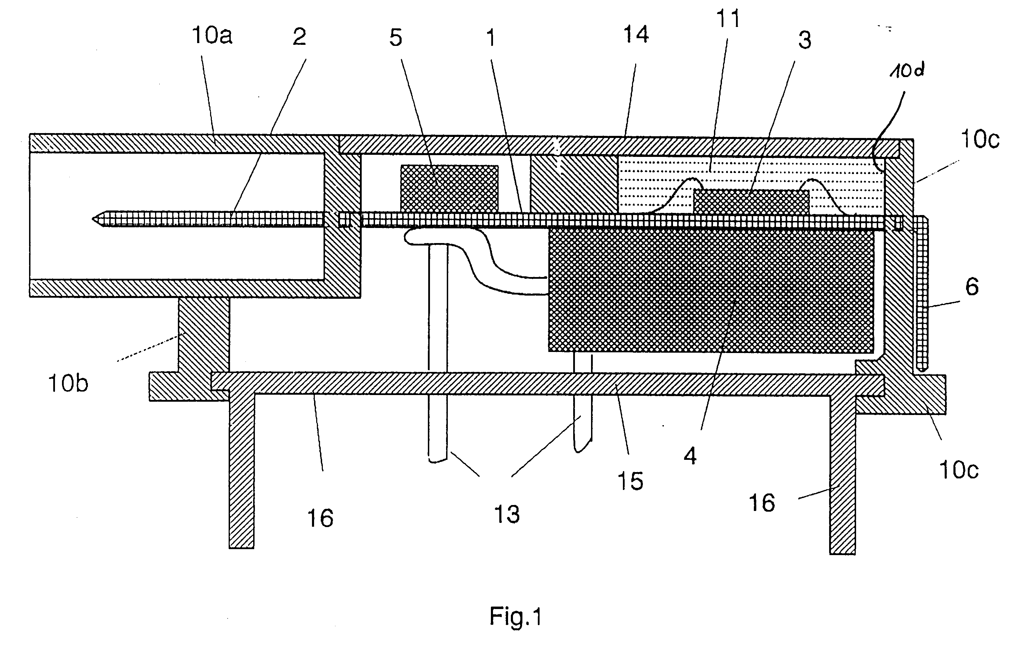

Wie Figur 1 zeigt, bildet der Kunststoffspritzteil 10 unter anderem eine Steckerummantelung 10a, Gehäusewände 10b und 10c sowie eine Ausnehmung 10d, in welche eine Vergußmasse 11 für den integrierten Stromkreis 3 eingebracht ist. Anschlußfahnen 12 dienen beispielsweise dem Anschluß von je zwei Anschlußdrähten 13 eines Elektromotors, beispielsweise eines Schrittmotors mit zwei Wicklungen. Mit dem Kunststoffspritzteil ist ein Deckel 14 und ein Boden 15 verbunden, beispielsweise eingeschnappt oder verschweißt. Der Boden 15 ist mit Befestigungsflanschen 16 zur mechanischen Verbindung mit dem Motor der Antriebseinheit versehen.

## Patentansprüche

1. Verfahren zur Herstellung einer elektrischen Antriebseinheit mit einem Elektromotor und einem mit demselben verbundenen Steuergerät, mit den Schritten,
- daß für das Steuergerät ein massiver Metallträger (1) als Stanzteil hergestellt wird, welcher zugleich als Steckkontakte ausgebildete Anschlüsse (2,12) und elektrische Verbindungen zur Verbindung elektrischer Bauelemente (3 bis 5) untereinander umfaßt,
- daß der Metallträger (1) teilweise mit Kunststoff (10) umspritzt und mit zumindest zwei verschiedenen elektrischen Bauelementen (3 bis 5), von denen zumindest eines als Mikroprozessor (3) ausgebildet ist, bestückt wird,
- daß überflüssige Teile (8) oder Verbindungen des Stanzteils zur Bildung einzelner, elektrisch voneinander getrennter Leiterbahnen oder Steckkontakte entfernt werden und
- daß Gehäuseteile (14, 15) angebracht werden.

2. Verfahren nach Anspruch 1,
dadurch gekennzeichnet,
daß beim Umspritzen mit Kunststoff (10) mindestens eine Aufnahme (10d) für eine Vergußmasse (11) geformt wird, die nach der Bestückung mit Bauelementen (3) vergossen wird.

3. Verfahren nach Anspruch 1 oder 2, dadurch gekennzeichnet, dass aus dem Kunststoffspritzteil (10) vorstehende Teile (6) des Stanzteils (1) als Kühlelemente (6) belassen werden.

4. Verfahren nach Anspruch 3, dadurch gekennzeichmet, dass Kühlelemente (6) umgebogen werden.

## Claims

1. A method of manufacturing an electrical drive unit with an electric motor and a control unit joined with it, with these steps:
- a solid metal carrier (1) is manufactured as a pressed part, which includes both connections (2, 12) configured as plug contacts and electrical connections for interconnecting electrical components (3 to 5),
- the metal carrier (1) is partly sprayed with plastics material (10) and assembled with at least two electrical components (3 to 5), of which one is configured as a microprocessor (3),
- excess parts (8) or connections of the pressed part are removed to form individual conductor tracks, electrically separated from each other, or plug contacts and
- the casing parts (14, 15) are attached.

2. A method according to Claim 1,
characterised in that,
in the spraying with plastics material (10) at least one cavity (10d) is formed for an encapsulating mass (11), which is poured in after the assembly of the components.

3. A method according to Claim 1 or Claim 2, characterised in that parts (6) of the carrier (1) outstanding from the sprayed plastics material part are left as a cooling element (6).

4. A method according to Claim 3, characterised in that the cooling elements are bent round.

## Revendications

1. Procédé de fabrication d'une unité d'actionnement électrique comprenant un moteur électrique et un appareil de commande relié à celui-ci, procédé selon lequel :
- on fabrique comme pièce estampée un support métallique massif (1) pour l'appareil de commande, qui comporte en même temps des branchements (2, 12) comme fiches de contact et des liaisons électriques pour relier électriquement entre eux les composants (3-5),
- on injecte la matière plastique (10) partiellement autour du support métallique (1) et on l'équipe d'au moins deux composants électriques différents (3-5), dont au moins l'un est un microprocesseur (3),
- on enlève les parties en excédent (8) ou les liaisons de la pièce estampée, pour former des chemins conducteurs individuels, séparés électriquement les uns des autres, ou des fiches de contact, et
- on met en place les parties de boîtier (14, 15).

2. Procédé selon la revendication 1,
caractérisé en ce qu'
en injectant la matière plastique (10) on forme au moins un logement (10d) pour une masse coulée (11) qui est introduite après la mise en place des composants (3).

3. Procédé selon les revendications 1 ou 2,
caractérisé en ce qu'
on laisse subsister des parties (6) de la pièce estampée (1), dépassant de la partie injectée (10) pour former des radiateurs (6).

4. Procédé selon la revendication 3,
caractérisé en ce que
les radiateurs (6) sont repliés.
